# EUROPÄISCHE PATENTANMELDUNG

(11) **EP 4 836 289 A1**
(43) Veröffentlichungstag der Anmeldung: **04.11.2026**
(21) Anmeldenummer: 25174081.7
(22) Anmeldetag: 02.05.2025
(51) Int. Cl.: H02S 20/23, F24S 25/636

(54) **HALTEVORRICHTUNG FÜR EIN SOLARMODUL UND MONTAGEVERFAHREN**

(71) Anmelder: SFS Group International AG, 9435 Heerbrugg (CH)
(72) Erfinder: Huang, Kun-Hao, 9425 Thal (CH); Kuster, Hanspeter, 9436 Balgach (CH); Brunnschweiler, Stefan, 9444 Diepoldsau (CH); Mughal, Nadja, 6973 Höchst (CH)

(57) **Zusammenfassung**

Eine Haltevorrichtung (100) zur absturzsicheren Befestigung von Solarmodulen, bevorzugt an existierenden Fassadenoberflächen, umfasst folgende Elemente:
- eine längsausgedehnte Grundschiene mit einer Basis (240) und zwei davon abragenden Schenkeln (241, 242) mit längs angeordneten, aufeinander zu weisenden Nuten (211, 212);
- ein Modulträger (300) mit einer Tragplatte (310) und einer davon rechtwinklig abragenden Konsole (350), der mit der Grundschiene (200) in Eingriff gebracht werden kann;
- eine Sicherungsklammer (400), die über eine Durchlassöffnung (410) verfügt, welche im montierten Zustand die Konsole (350) kragenartig umfasst mittels einer Sicherungsschraube (490) fest mit der Grundschiene (200) verbindbar ist;
- eine Modulklemme (500) bzw. Endklemme, die mittels einer Klemmschraube (590) mit dem Modulträger verschraubt werden kann und so ein Solarmodul in der Haltevorrichtung fixiert.

Ferner wird ein Montageverfahren für diese Haltevorrichtung beschrieben.

## Beschreibung

Die vorliegende Erfindung befasst sich mit einer Haltevorrichtung für ein Solarmodul, Photovoltaik-Modul, PV-Modul oder PV-Paneel, speziell an bzw. auf Fassaden bzw. Gebäudehüllen. Sie beschreibt ferner ein Verfahren zur vertikalen Montage einer oder mehrerer solcher Haltevorrichtungen.

### HINTERGRUND

Solarmodule zur Energieerzeugung sind zu einem vielfach gesetzlich geforderten Nutz- und Gestaltungselement bei Industrie- und Privatgebäuden geworden. Nachdem Freiland- und Dachinstallationen seit Jahrzehnten üblich sind, richtet sich der Fokus nunmehr auf Fassaden. Diese bieten mehrere Vorteile, die Dachinstallationen ganz oder teilweise nicht haben. So können in Winterzeiten in hohen Breitengraden, wo die Sonne tief steht, vertikal an Fassaden angebrachte Solaranlagen effizienter sein als jene, die auf dem Dach auf sommerliche Sonnenstände hin optimiert sind. Auch die Anhaftung von Schnee und Schmutz ist weniger ausgeprägt. Zudem können z. B. Fassaden genutzt werden, die stark nach Westen oder Osten orientiert sind und so in Tagesrandlagen Strom produzieren. Zudem haben speziell hohe Gebäude deutlich grössere Fassaden- im Vergleich zu Dachflächen.

Als Gebäudehülle wird in dieser Beschreibung die Gesamtheit aller Bauteile verstanden, die ein Gebäude nach aussen abschliessen, vereinfacht gesagt Dach und Fassade. Betrachtet man bei Industriegebäuden den Querschnitt einer typischen Gebäudehülle von innen nach aussen, so wird auf ein statisch tragendes Bauteil üblicherweise eine Isolationsschicht angeordnet und, beabstandet durch einen Lüftungspalt, eine Fassade aus Platten, Trapezblechen oder Ähnlichem vorgehängt. Diese Fassade selbst wird an einer Unterkonstruktion mechanisch befestigt, die üblicherweise als Metallkonstruktion ausgeführt und durch die Isolationsschicht hindurch mit der statisch tragenden Wand direkt verbunden ist.

Eine solche vorgehängte Fassade überdeckt also als äusserer Abschluss der Gebäudehülle die Unterkonstruktion bzw. Gebäudeisolation und schützt sie vor Umgebungseinflüssen. Soll eine bestehende Gebäudeoberfläche als Basis für Photovoltaikanlage dienen, wird man üblicherweise - schon aus Kostengründen - die Solarmodule auf die Fassade montieren.

Im vorliegenden Fall wird eine Haltevorrichtung für Solarmodule beschrieben, die sich besonders, aber nicht ausschliesslich zur Montage auf bestehenden Industriefassaden eignet.

### DEFINITIONEN

Als Photovoltaik-Paneel, PV-Panel bzw. PV-Modul oder Solarmodul wird in dieser Beschreibung eine Anordnung aus einer Vielzahl miteinander verschalteter Solarzellen verstanden, die üblicherweise hinter einer schützenden Glasplatte angeordnet und mit einem strukturellen Rahmen eingefasst sind. Solche Rahmen bestehen in der Regel aus Aluminium-Profilen. Da Solarmodule für Dächer, Fassaden oder Freilandinstallationen verwendet werden, ist ein Rahmen als mechanische Schnittstelle zur Befestigung am flexibelsten. Die Befestigung der Solarmodule kann mechanisch direkt durch Verschrauben an geeignete Unterkonstruktionen erfolgen oder alternativ durch Haltevorrichtungen, die sehr häufig auf Klemmelemente oder Einlegesysteme als Befestigung setzen.

Unter Halteelementen werden in diesem Dokument jene mechanischen Bauteile verstanden, die eine Verbindung zwischen einem Solarmodul und einer Unterkonstruktion bzw. bestehenden Fassade herstellen. Eine Haltevorrichtung ist damit ein System aus Halteelementen, die zusammen eine vorschriftsgemässe Befestigung eines Solarmoduls erlauben.

Der Begriff BAPV steht für "building attached photovoltaics" im Gegensatz zu BIPV = "building integrated photovoltaics". BIPV bedeutet, dass Solarmodule in die Gebäudehülle (building envelope) integriert werden, also verbaut als Teil von Dach und/oder Fassade. Bei BAPV sind die Solarmodule aufgesetzt auf ein bestehendes bzw. neues oder erneuertes Dach oder eine entsprechende Fassade. Die vorliegende Erfindung ist besonders geeignet als BAPV auf vertikalen Fassaden. Das schliesst die Verwendung auf Flachdächern oder anderen geneigten Flächen aber nicht aus. Auch ein Einsatz als BIPV ist grundsätzlich nicht ausgeschlossen.

### STAND DER TECHNIK

In der Montage auf Dächern werden häufig klemmende Haltevorrichtungen verwendet, bei denen Solarmodule auf punktuelle oder streifenförmige Auflager aus Aluminiumprofilen gesetzt und mittels Schrauben und Klammern fixiert werden. Um diese Systeme an der Vertikalen einsetzen zu können, sind dann zusätzliche Verankerungsbauteile nötig, um das Eigengewicht der Solarmodule abzufangen. Diese Ergänzungen erhöhen die Komplexität der Montage.

Der Stand der Technik WO 2021/108492 A1 zeigt eine Drehverschlussklemme zum Befestigen eines Solarmoduls an einer U-förmigen Tragschiene. Eine solche Drehverschlussklemme umfasst eine Flanschmutter, eine Schraube, ein Federelement und eine Klemmbacke. Die Schraube durchgreift die Klemmbacke und das Federelement und wird in das Gewinde der Flanschmutter geschraubt. Nach Einführen der Flanschmutter in zwei Führungen der Schiene kann der Rahmen eines Solarmoduls zwischen der Klemmbacke und der Schiene geklemmt werden.

Auf einem ähnlichen Prinzip beruht die EP 2 662 645 A2; hier ist die Flanschmutter als Nutenstein ausgeführt, der ebenfalls mit einer Klemmbacke verschraubbar ist, aber ohne Federelement auskommt. Die Klemmung erfolgt ebenfalls zwischen einer Grundschiene und der erwähnten Klemmbacke.

Von diesem Stand der Technik ausgehend, ist es Aufgabe der vorliegenden Erfindung, ein einfaches, aber handhabungssicheres Verfahren für die Befestigung von Solarmodulen an einer bestehenden Fassade vorzustellen. Zudem sollte das Befestigungssystem aus möglichst wenigen Einzelteilen bestehen, um den Aufwand bei der Lagerhaltung und der Montage gering zu halten.

### BESCHREIBUNG DER ERFINDUNG

Die in diesem Dokument beschriebene Haltevorrichtung dient dazu, Solarmodule an bzw. auf einer Gebäudehülle zu befestigen. Die Komponenten sind für diesen Zweck ausgelegt, schliessen aber die Anwendung an einer reinen Unterkonstruktion (d.h. einer nur auf statische Zwecke ausgelegten Tragkonstruktion) nicht aus. Die Haltevorrichtung umfasst hierzu mehrere Komponenten:
Grundschiene: Die Grundschiene ist ein langes (längsausgedehntes), in seiner Grundform im Querschnitt U-förmiges Profilelement oder ein Profilelement, das einen U-förmigen Abschnitt aufweist. Die Grundschiene kann vertikal an einer bestehenden Fassade montiert werden bzw. ist zur Montage auf einer solchen vorgesehen. Die Grundschiene umfasst eine Basis und zwei seitliche Schenkel, also von dieser Basis abragende Seitenwände. Am (offenen) Ende dieser Schenkel befinden sich zwei längs angeordnete Nuten, die einander gegenüberliegen, mit ihren Öffnungen zueinander orientiert sind und so zwischen sich einen Zwischenraum bilden.

Modulträger: Dieser umfasst eine Tragplatte und eine an ihr rechtwinklig angeordnete Konsole. Die Stirnseite dieser Konsole liegt damit parallel zur Ebene der Tragplatte. Die Tragplatte kann in die Nuten der Grundschiene eingreifen, füllt damit den Zwischenraum aus und ist dort nur noch in der Längsrichtung der Grundschiene verschieblich. Die Konsole dient einem Solarmodul bei der Montage als Auflager und nimmt das Eigengewicht des Solarmoduls auf und leitet es via Tragplatte in die Grundschiene ab.

Sicherungsklammer: Diese Klammer ist das Bauteil, mit dem die Position des Modulträgers in bzw. an der Grundschiene gesichert werden kann. Die Sicherungsklammer besitzt eine Öffnung, die im montierten Zustand die Konsole am Übergang zur Tragplatte wie ein flacher Kragen umschliesst. Gleichzeitig umgreift sie klammerartig die Grundschiene und kann dort optional mit einer Sicherungsschraube befestigt werden.

Modulklemme bzw. Endklemme: Die Modulklemme wie die Endklemme sind Bauteile, mit denen ein Solarmodul an einer montierten Anordnung aus Grundschiene, Modulträger und Sicherungsklammer befestigt wird. Sowohl Modulklemme wie Endklemme klemmen das Modul zwischen einer (Klemm-)Backe und der Sicherungsklammer. Mithilfe einer Klemmschraube können die Klemmen am Modulträger, spezifisch an der Konsole, befestigt werden. Eine Modulklemme hat zwei räumlich getrennte Klemmflächen, die mit entsprechenden Flächen der Sicherungsklammer jeweils ein Paar von Klemmbacken bilden, die je ein Solarmodul sicher halten kann. Eine Endklemme weist hingegen nur eine einzelne Klemmfläche auf, die mit einer der Klemmflächen der Sicherungsklammer ein Klemmbackenpaar bildet. Beide Klemmentypen sichern also ein Solarmodul in seiner Position an der Fassade und verhindern sein Herausfallen aus der Haltevorrichtung, leitet aber nicht primär das Eigengewicht des Solarmoduls in die Grundschiene ein.

In einer bevorzugten Ausführungsform sind die äusseren Flächen der seitlichen Schenkel der Grundschiene teilweise (i.e. mindestens in Teilflächen) parallel zueinander ausgerichtet. Alternativ könnten die Aussenflächen bzw. Schenkel bzw. Seitenflächen auch leicht zueinander geneigt ausgeführt werden. Die Aussenflächen dienen, wie weiter unten beschrieben als Anlageflächen für Teile der Sicherungsklammer.

Die Sicherungsklammer weist einen im Querschnitt U-förmigen Aufbau auf mit einer Klammerbasis und zwei davon abragenden, parallel angeordneten Seitenwangen, wobei die Aussenseite der Klammerbasis die Klemmflächen aufweist, an den später die Solarmodule anliegen werden. In einer besonders geeigneten, auch in den Zeichnungen dargestellten Form sind die Seitenwangen an den Längsenden der Sicherungsklammer angeordnet. Die Innendimensionen des U sind so gewählt, dass die Sicherungsklammer formschlüssig über die Grundschiene gestülpt werden kann. In der Grundausführung wird die Sicherungsklammer nur den Formschluss an der Grundschiene ermöglichen, mit der Ausbildung von Federzungen kann ein zusätzlicher Kraftschluss bzw. Klemmsitz erzielt werden. Durch Einsatz einer Sicherungsschraube wird die vollständige Fixierung und Absturzsicherung erreicht.

Wie erwähnt, weist die Sicherungsklammer eine Durchlassöffnung auf. Diese ist so dimensioniert, dass sie zur Montage über den Modulträger, präziser dessen Konsole, gestülpt werden kann. Dies geschieht, in dem die Konsole mit ihrer Stirnseite voran mit geringem Spiel durch die Durchlassöffnung geführt wird und damit die Sicherungsklammer die Konsole wie einen Kragen umgibt, sobald die Sicherungsklammer die Endposition erreicht hat.

Die Klemmung der Solarmodule erfolgt, wie oben erwähnt, zwischen Klemmflächen der Modulklemme und Anlageflächen bzw. Klemmflächen der Sicherungsklammer. Die Klemmung erfolgt somit niemals direkt zwischen der Grundschiene und der Modulklemme, sondern über die zwischenliegende Sicherungsklammer. Das hat den Vorteil, dass - im Vergleich zum oben offenen Ende der Grundschiene - der Rahmen eines Solarmoduls nicht auf den linienförmigen Kanten der Grundschiene aufliegt, sondern flächig auf den Klemmflächen der Klammerbasis der Sicherungsklammer.

Somit separiert die Durchlassöffnung bzw. im montierten Zustand die Konsole die beiden Klemmflächen. Sie liegen im vertikal montierten Zustand der Haltevorrichtung also oberhalb und unterhalb der Konsole.

Wie oben erwähnt, umgreift die Sicherungsklammer im vormontierten oder montierten Zustand das offene Ende der Grundschiene. Die Innenseiten der Seitenwangen der Sicherungsklammer werden daher einen lichten Abstand B_{SK} aufweisen, der geringfügig grösser gewählt wird als der Abstand der Aussenflächen der Schenkel der Grundschiene B_{G}. Dies verbessert die Handhabung bei der Montage.

Bevorzugt werden ein Teil der Seitenwangen als Federzungen ausgebildet, dergestalt, dass sie im montierten Zustand eine Klemmwirkung auf die Schenkel der Grundschiene ausüben können. Bevorzugt wird diese Ausbildung als Klemmzunge bei beiden Seitenwangen durchgeführt an jeweils gegenüberliegenden Abschnitten der Seitenwangen. Wie später in den Figuren illustriert, können die Klemmzungen als Unterabschnitt der Seitenwangen realisiert werden, die durch mindestens einen Schlitz vom Rest der Seitenwangen getrennt werden und geringfügig nach innen gebogen werden. Damit wird bei der Montage der erwähnte Klemmsitz erzielt.

Die Klemmung der Solarmodule erfolgt dadurch, dass die Modulklemme als im Querschnitt im Wesentlichen T-förmiges Bauteil ausgeführt wird mit einem Steg und zwei, an einem Ende des Steges rechtwinklig abragenden Klemmbacken. Die Klemmfläche wird durch die dem Steg zugewandte Unterseiten gebildet. Aus Montagegründen kann es Sinn machen, dass die Klemmbacken unterschiedlich weit vom Steg abragen.

Für die Verarbeitung hat es sich als Vorteil herausgestellt, wenn die Klemmbacken der Modulklemme einen zwischen sich angeordneten Verschraubungsbereich aufweisen, der, auf der vom Steg abgewandten Oberseite parallel zum Steg verlaufend angeordnet ist. Im Verschraubungsbereich ist eine Öffnung zur Aufnahme einer Klemmschraube angebracht. Physisch kann dieser Verschraubungsbereich als Vertiefung für einen Schraubenkopf, als abgeflachter oder markierter Bereich dargestellt sein.

Die Tragplatte als Teil des Modulträgers besitzt die Grundform eines Rechtecks mit den Seitenlängen a und b mit zwei gegenüberliegenden, entlang zweier paralleler Schnittkanten S₁ und S₂ abgeschnittenen Ecken. Die Kante a sei hierbei parallel zur Ebene der Konsole angelegt. In einer Ausführungsvariante entspricht der Abstand der beiden Schnittkanten S₁ und S₂ höchstens der Durchlassweite D_{G} der Grundschiene. Ist sie geringfügig grösser ausgeführt, lässt sich die Tragplatte dennoch seitlich verkippt in die Nuten einführen. Die Kantenlänge a entspricht höchstens dem Abstand W_{G} der Böden der beiden Nuten. Durch diese Geometrie wird gewährleistet, dass ein Modulträger mit der Tragplatte voran in die Grundschiene im Bereich des Zwischenraumes in die beiden Nuten eingefädelt werden kann. Durch Drehen werden die beiden nicht abgeschnittenen Ecken in der Nut angeschlagen. Die Konsole ist dabei (bei vertikal orientierter Grundschiene) so orientiert, dass sie im rechten Winkel zur Längsausdehnung der Grundschiene steht.

Zur Aufnahme einer Klemmschraube wird in der Stirnseite der Konsole eine Gewindebohrung angeordnet. Mit ihrer Hilfe werden bei der Montage eine Modulklemme bzw. eine Endklemme mit der Konsole / dem Modulträger verbunden.

Die Bauteile Grundschiene, Modulträger und Sicherungsklammer können als Basis sowohl eine Modulklemme mit zwei Klemmbacken wie auch eine Endklemme mit nur einer Klemmbacke aufnehmen. Wie eine Modulklemme kann die Endklemme mittels einer Klemmschraube mit der Konsole des Modulträgers verschraubt werden.

Bevorzugt sind die bisher beschriebenen Bauteile einer Haltevorrichtung (Grundschiene, Modulträger, Sicherungsklammer und Modul/Endklemme) als Abschnitte von entsprechend geformten Strangpressprofilen aus Aluminium bzw. Aluminiumlegierungen darstellbar. Bohrungen und Öffnungen lassen sich durch Fräsen, Sägen und Stanzen daraus herstellen. Alternativ lassen sich solche Bauteile auch aus Kunststoff herstellen, sofern statische Auslegung sowie Bau- und Brandschutzvorschriften dies zulassen. Bestimmte Bauteile wie die Modulklemme können auch farblich behandelt werden (Lackieren, Pulverbeschichten, Eloxieren) um eine farbliche Anpassung an das Solarmodul bzw. dessen Rahmen zu erzielen.

Ferner können die Klemmbacken bzw. die Klemmflächen mit elastischen Einlagen oder Belägen versehen werden, die eine Dämpfung in der Klemmung bewirken. So kann ein Restspiel der Klemmung ausgeglichen werden und ein Klappern der Solarmodule wird verhindert.

Die Montage einer Haltevorrichtung, wie oben strukturell beschrieben, kann wie folgt vorgenommen werden: An einer bestehenden Fassade, Gebäudehülle oder Unterkonstruktion werden mindestens eine lange Grundschiene (nimmt mehrere Haltevorrichtungen auf) oder einer Vielzahl von Abschnitten von Grundschienen (für einzelne Haltevorrichtungen) vertikal befestigt. Anschliessend werden ein (oder mehrere) Modulträger in die Grundschiene eingedreht, so dass die Tragplatte des Modulträgers in die Nuten der Grundschiene eingreifen und die Konsole eine waagerechte Orientierung einnimmt. Als nächstes wird pro Modulträger eine Sicherungsklammer über die Stirnseite der Konsole durch die Durchlassöffnung geschoben, bis die Seitenwangen an den Aussenseiten der Schenkel der Grundschiene anliegen. Anschliessend werden die aufgesteckte Kombination aus Modulhalter und Sicherungsklammer ausgerichtet, bis eine vordefinierte Sollposition erzielt wurde. Ist diese Sollposition gefunden, wird diese durch Verschrauben der Sicherungsklammer mit der Grundschiene über eine Sicherungsschraube fixiert. Als abschliessender Schritt wird eine Modulklemme mittels einer Klemmschraube vormontiert.

Wenn ein ganzes Array bzw. eine Anordnung aus mehreren Haltevorrichtungen an einer Fassade befestigt sind, können eines oder mehrere Solarmodule durch Einhängen und Festklemmen montiert werden.

Verfügt die Sicherungsklammer über Federzungen, wird der Montageschritt der Sicherungsklammer vereinfacht. Das Anbringen der Sicherungsschraube in der Vertikalen kann ohne weitere Hilfsmittel erfolgen, weil die durch die Federzungen auf die Grundschiene ausgeübte Federspannung einen ausreichend festen Sitz für die Sicherungsklammer und den Modulträger gewährleisten kann. Die in einigen Ländern vorgeschriebene Absturzsicherung wird durch das Eindrehen der Sicherungsschaube sichergestellt; diese wird in der beschriebenen Konfiguration auf Scherung beansprucht.

Das beschriebene Zusammenspiel aus Grundschiene, Modulträger, Sicherungsklammer und Module/Endklemme bewirkt beim Anziehen der Sicherungsschraube, dass die Modulklemme und der Modulträger gegeneinander verspannt werden; damit wird die Tragplatte des Modulträgers in der Längsnut der Grundschiene in einen Klemmsitz gegen den oberen Nutrand gepresst. Ist kein Solarmodul eingelegt, stützen sich der Steg / Doppelsteg der Modulklemme / Endklemme auf der Sicherungsklammer ab und pressen diese an die Grundschiene. Ist ein Solarmodul eingelegt und wird geklemmt, wirkt die Klemmkraft von der Klemmbacke der Modul/Endklammer über den Rahmen des Solarmoduls wiederum auf die Sicherungsklammer, die wiederum gegen die Grundschiene gedrückt wird. Somit kann eine Haltevorrichtung auch ohne Sicherungsschraube, sowohl mit und ohne eingelegtes Solarmodul zwischen Sicherungsklammer und Grundschiene einen Klemmsitz zwischen Modul/Endklemme und Grundschiene gewährleisten.

Es bleibt anzumerken, dass die beschriebene Haltevorrichtung auch auf einer Dachfläche Anwendung finden könnte, wo Solarmodule häufig mit geringer Neigung befestigt werden. Die beschriebene Haltevorrichtung benötigt dann in der Regel keine zusätzliche Absturzsicherung und auf den Einsatz einer Sicherungsschraube kann verzichtet werden.

Weiterhin kann eine Grundschiene auch in der Horizontalen an einer Fassade befestigt werden, wenn dies technisch erforderlich oder zur Montage vorteilhaft ist. Beim Modulträger muss lediglich die Anordnung der Konsole um 90 gedreht oder die Tragplatte entsprechend modifiziert werden. Beides sollte im Rahmen dieser Offenbarung für den Fachmann kein Problem darstellen.

### KURZE CHARAKTERISIERUNG DER FIGUREN

Figur 1 A zeigt eine Grundschiene 200 im Querschnitt, Figur 1B in schräger Draufsicht.
Figur 2 zeigt eine Sicherungsklammer in schräger Draufsicht.
Figuren 3 A und B zeigt eine Endklemme 600 im Querschnitt und in schräger Ansicht.
Figuren 4 A und B zeigt eine Modulklemme 500 im Querschnitt und in Schrägansicht.
Figuren 5 A bis E zeigt einen Modulträger 300 in verschiedenen Ansichten
Figur 6 zeigt eine Explosionsansicht einer erfindungsgemässen Haltevorrichtung mit zwei Endklemmen und einer Modulklemme.
Figur 7 zeigt eine exemplarische Ansicht dreier Haltevorrichtungen 100 in verschiedenen Varianten.
Figur 8 zeigt eine Variante einer Grundschiene 200, die auch als Hutprofil bezeichnet wird.

### DETAILLIERTE BESCHREIBUNG DER FIGUREN

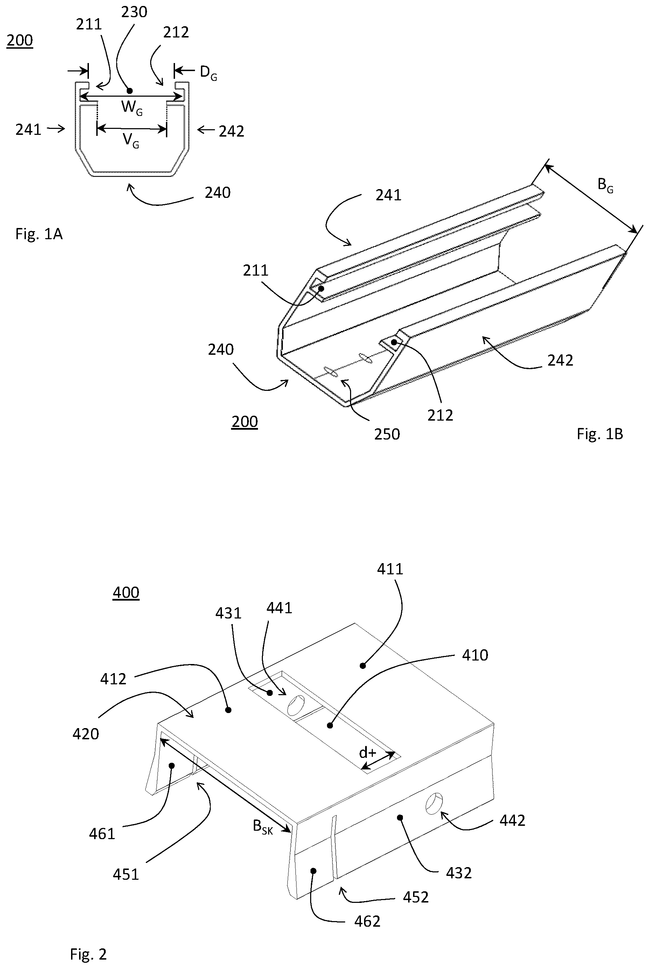

In den Figuren 1 A und B sind eine Grundschiene 200 unter verschiedenen Blickwinkeln dargestellt mit einer bevorzugt flachen Basis 240 zur Anlage an einer Fassade und zwei Schenkeln 241, 242. Deren Ausrichtung zueinander ist zumindest in Teilflächen bevorzugt parallel, um, wie oben mehrfach erwähnt, sowohl einen Klemmsitz wie auch ein erleichtertes Aufschieben einer Sicherungsklammer 400 (vgl. Fig. 2) zu ermöglichen. An den offenen Enden der beiden Schenkel 241 und 242 befinden sich zwei Längsnuten 211 und 212, deren Öffnungen aufeinander zu weisen und so zwischen sich einen Zwischenraum 230 definieren. Das Quermass B_{G} der Grundschiene 200 wird am oberen offenen Ende gemessen. Die Nuten 211 und 212 werden mit unterschiedlich langen Schenkeln ausgebildet, wobei die der Öffnung der Grundschiene zugewandten Schenkel kürzer ausgebildet sind. Dies führt dazu, dass die Durchlassweite D_{G} der Grundschiene grösser ist als die Weite V_{G} der unteren Verengung des Zwischenraums 230. Der von Nut-Boden zu Nut-Boden gemessene Abstand W_{G} der Längsnuten 211 und 212 ist somit grösser sowohl als V_{G} und W_{G}. Insgesamt gilt, wie aus den Figuren 1A und 1B ersichtlich W_{G} > D_{G} > V_{G}. In der Anwendung bei der Vertikalmontage können sowohl lange Grundschienen über die ganze Fassadenhöhe angebracht werden, oder auch kurze Abschnitte davon. Dies hängt von der Fassadenbeschaffenheit wie auch statischen Vorgaben oder Montagegepflogenheiten ab.

Befestigt werden kann eine Grundschiene durch Befestigungsöffnungen 250 in der Basis 240 hindurch. Als Befestiger kommen Schrauben, selbstbohrende Schrauben, Niete, Bolzen oder Ähnliches je nach statischen Vorgaben bzw. Untergründen in Frage.

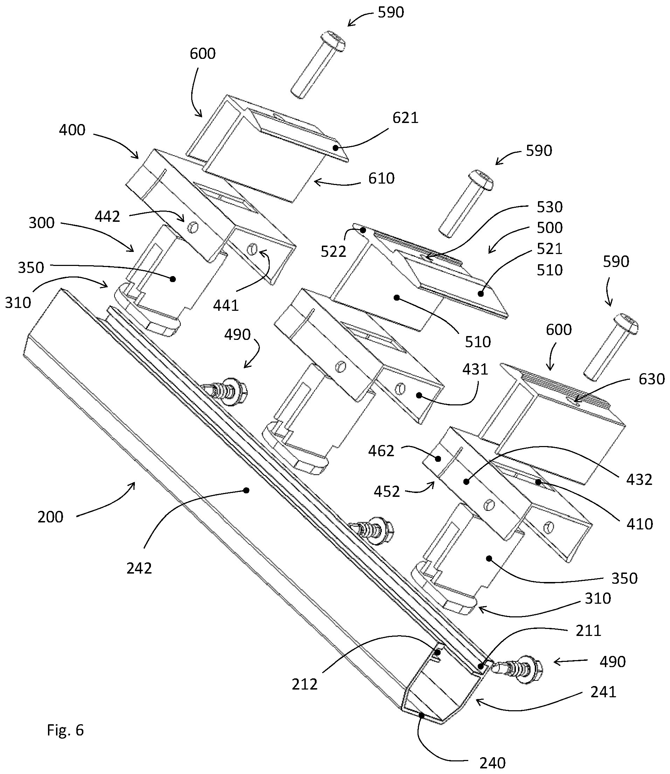

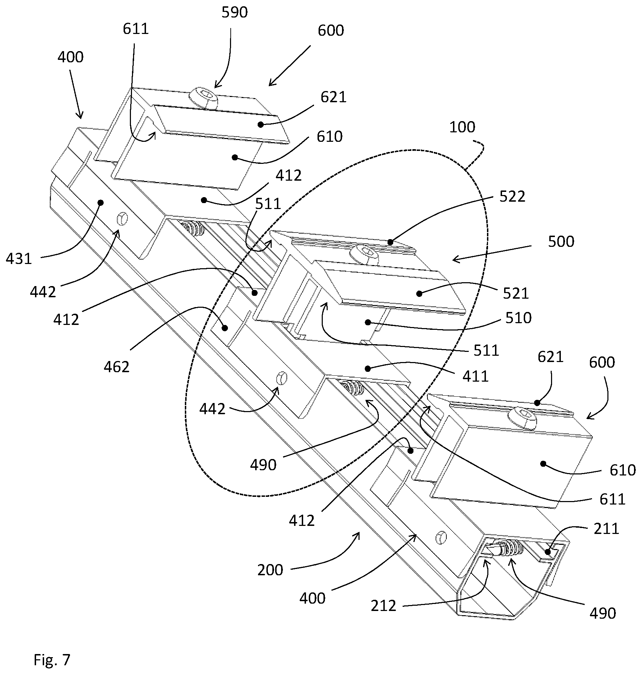

Figur 2 zeigt eine Sicherungsklammer 400. Sie weist im Querschnitt grundsätzlich die Form eines umgekehrten Troges auf mit einer weitgehend flachen, ebenen Klammerbasis 420 und zwei längs angeordneten, abragenden Seitenwangen 431 und 432. Die Oberfläche der Klammerbasis 420 weist zwei Klemmflächen 411, 412 auf, welche durch eine Durchlassöffnung 410 getrennt sind. Die Durchlassöffnung 410 im gezeigten Beispiel ist bevorzugt rechteckig, wobei die längere Seite des Rechtecks quer zu den Seitenwangen 431, 432 orientiert ist. Der lichte Abstand der Seitenwangen 431, 432 beträgt B_{SK} und ist geringfügig grösser gewählt als das Quermass B_{G} der Grundschiene 200 (vgl. Fig. 1B). An den Seitenwangen 431, 432 dieser bevorzugten Ausführungsform sind zwei gegenüberliegende Federzungen 461, 462 angeordnet, die technisch als durch Schlitze 451 und 452 (teil-)abgetrennte Bereiche der Seitenwangen 431, 432 herstellbar sind. Werden diese Bereich bei der Herstellung geringfügig nach innen vorgebogen, ergeben oder erhöhen sie die mögliche Klemmkraft, wenn die Sicherungsklammer auf eine Grundschiene aufgeschoben wird, wie vorgängig bzw. unten zu Figur 6 und 7 beschrieben.

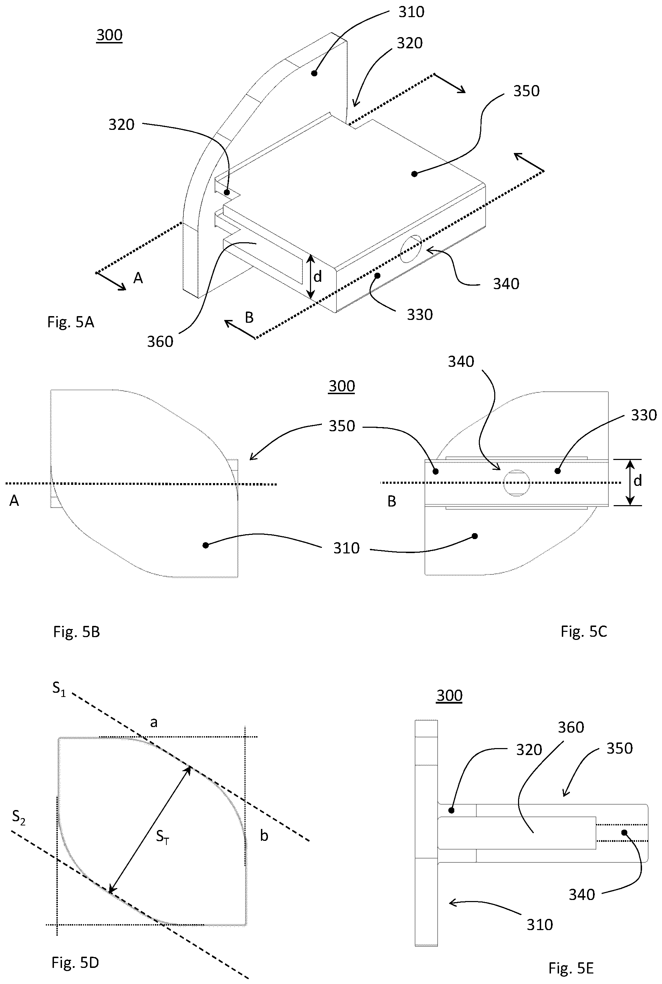

Die Breite der Durchlassöffnung 410 ist mit d+ markiert. Sie ist geringfügig grösser als die Stärke d der Konsole (350, siehe Figur 5) gewählt, wodurch die Bedingung erfüllt wird, dass die Sicherungsklammer 400 via die Durchlassöffnung 410 über die Konsole 350 des Modulträgers 300 geschoben werden kann.

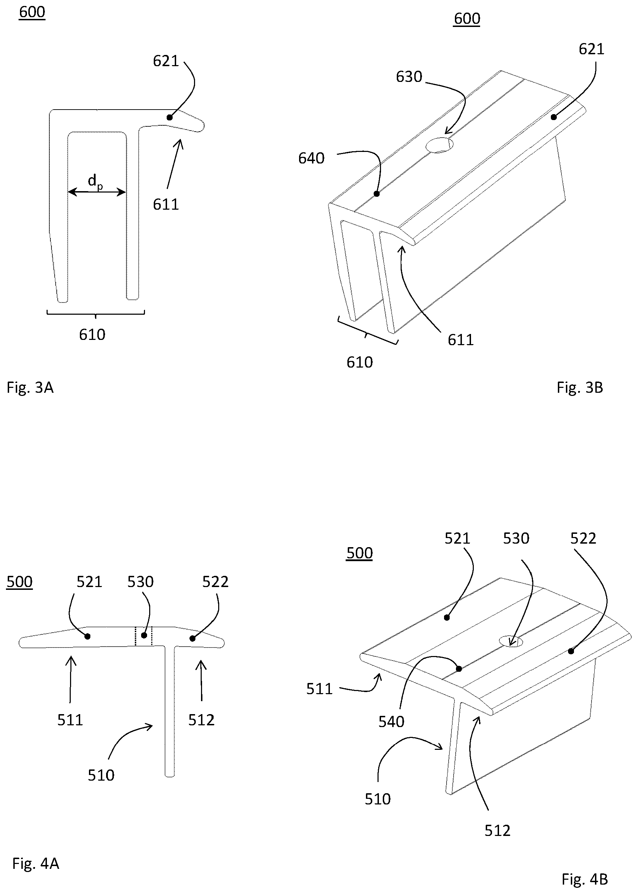

Die Figuren 3A und 3B zeigen eine Ausführungsform einer Endklemme 600. Sie kommt zum Einsatz, wenn nur ein Solarmodul einseitig geklemmt werden soll. Eine Endklemme 600 besteht aus einem Doppelsteg 610, wobei der lichte Abstand der Stege so bemessen ist, dass eine Konsole zwischen den Stegen Platz findet. Dieser Abstand dₚ ist vergleichbar mit d+ der Durchlassöffnung 410 der Sicherungsklammer 400 und somit ebenfalls leicht grösser gewählt als die Stärke d der Konsole (350, siehe Figur 5). Eine einzelne Klemmbacke 621 ragt vom Verbindungsstück am Kopf des Doppelstegs 610 ab und bietet folglich eine Klemmfläche 611. Wie Fig. 3B ersichtlich, weist die Oberfläche einen Verschraubungsbereich 640 auf, in dem eine Öffnung 630 für eine Klemmschraube 590 (hier nicht abgebildet) eingebracht ist.

Figuren 4A und B zeigen in Seitenansicht bzw. schräger Draufsicht eine Modulklemme 500, wie sie am häufigsten bei der Befestigung einer Vielzahl von Solarmodulen zu einem Array genutzt wird. Sie klemmt wegen zweier Klemmbacken 521, 522 jeweils zwei Solarmodule zu gleich. Die Modulklemme 500 besitzt nur einen Steg 510, der bei der Montage an einer Seite einer Konsole zur Anlage kommt. Die beiden Klemmbacken in dieser Ausführung sind unterschiedlich lang gestaltet, was für eine bestimmte Montageweise von Vorteil ist. Sie können aber auch - für alternative Montagearten - so gestaltet werden, dass die Ausdehnung der Klemmbacken symmetrisch zur Öffnung 530 ist. In der dargestellten Ausführungsform würde gemäss der weiter unten geschilderten Montageschritte die kurze Klemmbacke 522 bei vertikaler Anbringung nach oben weisen. Damit liegt ein Solarmodulrahmen nicht direkt auf der Konsole 350 auf, sondern auf dm Steg 510, der wiederum plan auf der Konsole 350 anliegt. Diese Anordnung des Steges ist allerdings nicht zwingend und könnte je nach Anwendung bzw. Anforderung auch anders gewählt werden. Auch könnte eine Modulklemme 500 mit einem Doppelsteg ausgeführt werden wie beispielsweise die in Fig. 3 gezeigte Endklemme 600 mit Doppelsteg 610.

Figur 5 besteht aus einer Schrägansicht (5A) über einen Modulträger 300, einer Ansicht von unten (Unterseite der Tragplatte 310) (5B), einer Draufsicht auf die Tragplatte 310 von der Seite der Konsole 350 her (5C), einer Hilfsskizze zur Beschreibung der Form der Tragplatte 310 und einer Seitenansicht eines Modulträgers 300.

Ein Modulträger 300 umfasst im Wesentlichen zwei Hauptbestandteile: Eine Tragplatte 310 und eine senkrecht darauf angeordnete Konsole 350. Die Tragplatte bildet die mechanische Schnittstelle zu einer Grundschiene 200 (vgl. Figur 1, 6 und 7) und weist eine dafür charakteristische Form auf. Die Konsole 350 dient als Befestigungspunkt für eine Modulklemme 500 bzw. Endklemme 600 und leitet das Eigengewicht eines Solarmoduls über die Tragplatte 310 in die Grundschiene 200 ein. Die Konsole 350 ist als im Wesentlichen quaderförmiges Element ausgeführt mit einer schmalen Stirnseite 330 der Höhe d. Diese Höhe d ist u.a. so gewählt, dass eine Gewindebohrung 340 eingebracht werden kann, die später zur Aufnahme einer Klemmschraube 590 dient. Am Übergang zwischen Konsole 350 und Tragplatte 310 sind an der Schmalseite der Konsole zwei Aussparungen 320 angebracht. Diese nehmen, wenn der Modulträger 300 in der Grundschiene 200 angeordnet ist, den oberen Schenkel der Nut(en) 211 und 212 auf. In Figur 5A ist ersichtlich, dass der Körper der Konsole 350 eine Aushöhlung 360 zeigt. Diese dient der Gewichts- und Materialersparnis. Die Markierungslinien A und B veranschaulichen die Blickrichtung bzw. Blickebene von Fig. 5B und 5C.

Die Figuren 5B und 5C zeigen eine Ansicht von unten und von oben auf einen Modulträger 300. Deutlich erkennbar ist die spezielle Form der Tragplatte 310, deren Abmessungen im Zusammenhang mit Figur 5D und E weiter erläutert wird.

Die Tragplatte 310 in Figur 5D besitzt die Grundform eines Rechtecks mit den Seitenlängen a und b mit zwei gegenüberliegenden, entlang zweier paralleler Schnittkanten S₁ und S₂ abgeschnittenen Ecken. Die Kante a sei hierbei parallel zur Ebene der Konsole angelegt (vergleiche Figur 5B). Dann entspricht der Abstand S_{T} der beiden Schnittkanten S₁ und S₂ höchstens der Durchlassweite D_{G} der Grundschiene und die Kantenlänge a höchstens dem Abstand W_{G} der Böden der beiden Nuten. Gleichzeitig wird man bevorzugt sicherstellen, dass der Abstand ST grösser ist als die Weite VG der unteren Verengung an der Grundschiene 200. Durch diese Geometrie wird gewährleistet, dass ein Modulträger 300 mit der Tragplatte 310 voran in die Grundschiene 200 im Bereich des Zwischenraumes 230 eingeführt werden kann und dort durch Verdrehen in die beiden Nuten eingefädelt werden kann. Durch die Drehung werden die beiden nicht abgeschnittenen Ecken in der Nut angeschlagen. Die Konsole 350 wird dabei so orientiert, dass sie im rechten Winkel zur Längsausdehnung der (vertikal montierten) Grundschiene ausgerichtet ist. Durch eine symmetrische Anordnung der Konsole 350 auf der Tragplatte 310 lässt sich erreichen, dass das Eindrehen des Modulträgers 300 in eine Grundschiene 200 nicht von einer speziellen Orientierung des Modulträgers abhängig ist.

In Figur 5E ist eine seitliche Draufsicht auf den Modulträger 300 gezeigt. Die Aushöhlung 360 ist als durchgehende Ausnehmung durch die Konsole ausgeführt, die Gewindebohrung 340 ist in von der Tragplatte wegweisenden Front der Konsole 350 angelegt und bietet ausreichend Gewindelänge.

Figur 6 zeigt eine Explosionsansicht einer erfindungsgemässen Haltevorrichtung, wobei hier eine Grundschiene 200 mit drei Haltevorrichtungen dargestellt ist, mit zwei Endklemmen 600 jeweils aussen und einer zentralen Modulklemme 500. Aus Platzgründen sind nicht an allen Bauteilen alle Referenzzeichen angefügt. Die Abstände der drei Haltevorrichtungen zueinander wäre in Realität deutlich grösser

Die Grundschiene 200 weist an ihrer Unterseite eine Basis 240 auf, die - in der Regel durch Verschrauben - mit einer bestehenden Fassade verbunden wird. Figur 6 zeigt drei Modulträger 300 zum Einbau in die Grundschiene 200 via Nuten 211, 212. Der Einbau wird über ein Eindrehen, wie bei Figur 5 beschrieben, erreicht. Drei Sicherungsklammern 400 sind lagerichtig so eingezeichnet, dass die Durchlassöffnung(en) 410 mit den Konsolen 350 der Modulträger 300 fluchten. In Endlage werden die Seitenwangen 431, 432 dann an den Aussenseiten der Schenkel 241 und 242 anliegen. Die Federzungen 462 sind als Teil der Seitenwangen 432 gezeigt, gebildet bzw. abgetrennt durch schmale Schlitze 452.

Die Öffnungen 441 und 442 sind als Durchführung für eine Sicherungsschraube vorgesehen, mit der die Sicherungsklammer 400 an der Grundschiene 200 zu befestigen ist. Je nach Einbaulage und Präferenz des Monteurs kann eine der beiden Öffnungen verwendet werden. Die Modulklemme 500 mit ihrem Steg 510 und den dazu quer als T angeordneten Klemmbacken 521, 522 bzw. die Endklemmen 600 mit ihrem Doppelsteg 610 und der einzelnen Klemmbacke 621 sind lagerichtig, aber nicht in Endposition eingezeichnet. Klemmschrauben 590 werden bei der Montage durch Öffnungen 530 bzw. 630 in der Modulklemme 500 bzw. Endklemme 600 geführt und greifen in ein entsprechendes Gewinde in der Konsole 350 ein.

Die Ausgestaltung der Modulklemme 500 bzw. Endklemmen 600 unterscheidet sich vom dargestellten Design in Figur 3 und 4; funktionell sind die Ausführungen jedoch gleich.

Figur 7 zeigt das Arrangement von Figur 6 in montiertem Zustand, jedoch ohne Solarmodul. Der Umfang einer montierten Haltevorrichtung 100 ist durch die gestrichelte Umrandung angedeutet. Im Folgenden soll nur auf die wesentlichen Unterschiede zu Figur 6 bzw. wichtigen Funktionen exemplarisch eingegangen werden.

In Figur 7 sind die Modulträger (300, vgl. Figur 6) in den Nuten 211 und 212 der Grundschiene 200 eingedreht bzw. verankert und durch Sicherungsklammern 400, die per Sicherungsschraube 490 mit der Grundschiene 200 verschraubt sind, an ihrer Sollposition gesichert. Sie sind somit nicht mehr entlang der Längsachse der Grundschiene 200 verschiebbar.

Aus der Darstellung der mittleren Haltevorrichtung lässt sich ersehen, dass die als Randabschnitt einer Seitenwange 432 ausgeführte Federzunge 462 als temporäre Klemmung bei der Montage der Sicherungsklammer 400 dienen kann, wenn dieser Abschnitt z.B. bei der Herstellung nur geringfügig nach innen gebogen wird. Diese Federzunge 462 erzeugt, so hat die Praxis gezeigt, einen ausreichenden Klemmsitz, um einen eingedrehten Modulträger (300, hier verdeckt) auch bei vertikaler Anordnung der Grundschiene 200 zu halten. Bevorzugt wird man pro Sicherungsklammer 400 zwei, symmetrisch zueinander angeordnete Federzungen 461 und 462 vorsehen; dies ist jedoch nicht wesentlich. Gleichzeitig kann der Modulträger innerhalb der Nuten 211, 212 mitsamt der Sicherungsklammer 400 längs der Grundschiene gegen den Widerstand des Klemmsitzes manuell verschoben, sprich ausgerichtet werden. Da die Sicherungsklammer 400 auch ein Rückdrehen des Modulträgers (300, verdeckt) verhindert, kann dieser auch nicht aus der Grundschiene 200 herauskippen. Von Vorteil ist, dass zu diesem Zeitpunkt weder eine Modulklemme 500 noch eine Endklemme 600 montiert sein muss - was das Ausrichten erleichtert. Auch spielt es keine Rolle, ob der gewählte Montagepunkt für eine Modulklemme 500 oder Endklemme 600 vorgesehen ist, weil die Bauteile Grundschiene 200, Modulträger 300 und Sicherungsklammer 400 für jeden der Befestigungspunkte identisch sind. Der Modulträger kann - ohne Einbussen an Sicherheit - nur in zwei technisch gleichwertigen Orientierungen verbaut werden, dasselbe gilt für die Sicherungsklammer 400. Die Montage eines falschen Bauteils ist bis zu diesem Punkt nicht möglich.

Die Darstellung in Figur 7 zeigt, dass der Doppelsteg 610 der Endklemme 600 die Konsole (350, hier unsichtbar) beidseitig umgreift, während der Steg 510 dies nur auf einer Seite tut. Die Anordnung der Klemmbacken 521 und 522 auf beiden Seiten des Steges 510 bei der Modulklemme 500 erlaubt diese Vereinfachung, während die einseitige Klemmbacke 621 an der Endklemme 600 aus Stabilitätsgründen den Doppelsteg 610 benötigt.

Eine Klemmschraube 590 hält, wie gezeigt, die Modulklemme 500 bzw. Endklemme 610 an ihrem Ort. Werden als Sicherungsschraube 490 selbstbohrende Schrauben verwendet, kann nach klemmender Vormontage und Ausrichtung des Modulträgers 300 die Position ohne Vorbohren der Grundschiene durch die Öffnung 441 bzw. 442 erzielt werden. Versuche haben gezeigt, dass pro Haltevorrichtung 100 bzw. pro Halteklemme 400 eine Sicherungsschraube 490 ausreicht - je nach Lastenheft.

Für die folgende Erläuterung des Vorgehens bei einer Montage ist zu beachten, dass unten angesprochene "obere Aufnahmenut" (hier) durch die Klemmfläche 511 der Modulklemme 500 und der Klemmfläche 411 der Sicherungsklammer 400 gebildet wird. Die zugehörige "untere Aufnahmenut" wird (hier) gebildet durch die Klemmbacke 621 (bzw. deren Klemmfläche 611) und die Klemmfläche 412 der in Längsrichtung benachbarten Sicherungsklammer 400.

Die Breite der Klemmbacken 521, 522 bei einer Modulklemme 500 ist hier sichtlich unterschiedlich ausgeführt. Eine breitere Backe für die Halterung des (in der Vertikalen) oberen Solarmodulrands wird bekannterweise verwendet, um die Montage sicherer zu gestalten. Der lichte, vertikale Abstand von zwei aufeinander folgenden Konsolen wird grösser gewählt als die Höhe des Solarmoduls; der lichte Abstand zwischen den Vorderkanten zweier aufeinander zu weisender Klemmbacken aber geringer als die Höhe des Solarmoduls. Werden nun die Modulklemmen 500 und Endklemmen 600 vormontiert, das heisst mit Hilfe der Klemmschrauben befestigt, aber noch nicht in Endposition angezogen, kann eine besonders einfache Montageart realisiert werden. Dann lässt sich ein Solarmodul von unten in die o.a. obere Aufnahmenut einschieben. Ist das Solarmodul so weit nach oben eingeschoben, dass dessen unterer Rand bzw. Rahmen die Klemmbacke der zugehörigen unteren Haltevorrichtung passieren kann, kann das Solarmodul in die o.a. untere Aufnahmenut eingeschoben werden. Da die "obere" Klemmbacke 521 länger ist als die "untere" Klemmbacke 621, bleibt das Solarmodul an seinem Platz und wird danach durch Festziehen der zugehörigen Klemmschrauben 590 endgültig geklemmt. Natürlich könnte die Breite der Klemmbacken 521, 522 einer Modulklemme 500 auch gleich gewählt werden, damit lässt sich dann eine besonders enge Montage von Solarmodulen erreichen, allerdings mit erhöhtem Aufwand für eine temporäre Sicherung eines Solarmoduls bei der Montage.

Ein weiterer Vorteil der vorgeschlagenen Lösung besteht darin, dass eine Anpassung an verschiedene Rahmenbreiten bzw. -tiefen von Solarmodulen in weiten Grenzen durch Anpassung nur der Bauhöhe des Stegs 510 / Doppelstegs 610 bzw. der Konsole 350 möglich ist. Die konstruktiven Grundprinzipien bleiben dabei jeweils erhalten, ebenso das Vorgehen bei der Montage incl. der verwendeten Werkzeuge.

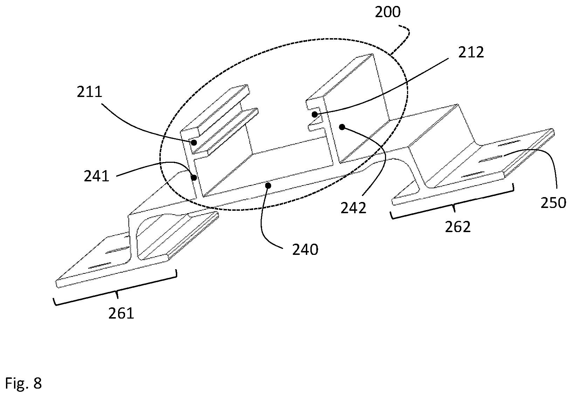

Figur 8 zeigt eine Variante einer Grundschiene 200, hier gezeigt als "einen U-förmigen Abschnitt aufweisend". Einige wesentliche strukturelle und funktionelle Merkmale sind gezeigt, wie die Basis 240, die Schenkel 241 und 242 sowie die Längsnuten 211 und 212. Damit ist auch deutlich, dass das Zusammenspiel mit einem Modulträger, einer Sicherungsklammer und einer Modul/Endklemme gewährleistet ist wie für die Grundschiene gemäss Figuren 1A und 1B. Das Profil gemäss Figur 8 stellt ein Hutprofil dar, mit der Grundschiene 200 als Kappe und zwei Auslegern 261 und 262 als Hutkrempe. Diese Ausleger 261 und 262 weisen Befestigungsöffnungen 250 auf, die zur Fixierung an einer Unterlage dienen. Während das Profil gemäss Figur 1 besonders auf Trapezblechen Einsatz findet, lässt sich das Hutprofil nach Figur 8 insbesondere an bestehenden, flächig-ebenen Fassadenplatten anbringen.

Die in den Figuren gezeigten Ausführungsformen sind beispielhaft und schliessen alternative bzw. technisch äquivalente Ausführungsformen daher nicht aus. Einzelne Merkmale von Bauteilen können zu bevorzugten Ausführungsformen gehören. Im Zweifelsfall sind der Wortlaut und die Zuordnung in den eingereichten Ansprüchen massgeblich.

## Patentansprüche

1. Haltevorrichtung (100) zur absturzsicheren Befestigung von Solarmodulen, umfassend:
- eine längsausgedehnte Grundschiene (200) zur Befestigung an einer bestehenden Fassade, wobei die Grundschiene (200) eine Basis (240) und zwei davon abragende Schenkel (241, 242) aufweist und am offenen Ende dieser Schenkel (241, 242) zwei längs angeordnete Nuten (211, 212) angeordnet sind, deren Öffnungen (221, 222) einander gegenüberliegen und zwischen sich einen Zwischenraum (230) definieren;
- ein Modulträger (300) mit einer Tragplatte (310) und einer davon rechtwinklig abragenden Konsole (350), die wiederum eine Stirnseite (330) aufweist, die parallel zur Tragplatte verläuft, wobei die Tragplatte (310) mit den Längsnuten (211, 212) der Grundschiene (200) in Eingriff gebracht und so im Zwischenraum (230) angeordnet werden kann;
- eine Sicherungsklammer (400), die über eine Durchlassöffnung (410) verfügt, welche im montierten Zustand die Konsole (350) kragenartig umfasst und gleichzeitig die Grundschiene (200) umgreift und optional mittels einer Sicherungsschraube (490) fest mit der Grundschiene (200) verbindbar ist;
- eine Modulklemme (500) oder eine Endklemme (600), die mittels einer Klemmschraube (590) mit der Konsole (350) des Modulträgers (300) verschraubbar sind und zur Aufnahme von einem (Endklemme) bzw. zwei Solarmodulen (Modulklemme) dienen.

2. Haltevorrichtung (100) nach Anspruch 1, **dadurch gekennzeichnet, dass** die Modulklemme (500) zwei getrennte Klemmflächen (511, 512) aufweist, die jeweils paarweise mit korrespondierenden Klemmflächen (411, 412) der Sicherungsklammer (400) ein Klemmbackenpaar (411, 511) (412, 512) bilden.

3. Haltevorrichtung (100) nach Anspruch 1 und 2, **dadurch gekennzeichnet, dass** die Endklemme (600) eine einzelne Klemmfläche (611) aufweist, die mit einer der Klemmflächen (411, 412) der Sicherungsklammer (400) ein Klemmbackenpaar (611) (412 oder 512) bildet.

4. Haltevorrichtung nach Anspruch 1-3, **dadurch gekennzeichnet, dass** die Aussenflächen der Schenkel (241, 242) der Grundschiene (200) zumindest abschnittsweise parallel ausgerichtet sind.

5. Haltevorrichtung (100) nach Anspruch 1 -4, **dadurch gekennzeichnet, dass** die Sicherungsklammer (400) einen im Querschnitt U-förmigen Aufbau aufweist mit einer Klammerbasis (420) und zwei davon abragenden Seitenwangen (431, 432), wobei die Aussenseite der Klammerbasis (420) die Klemmflächen (411, 412) aufweist.

6. Haltevorrichtung (100) nach den Ansprüchen 1-5, **dadurch gekennzeichnet, dass** die Durchlassöffnung (410) der Sicherungsklammer (400) so dimensioniert ist, dass sie zur Montage über den Modulträger (300) gestülpt werden kann, dergestalt, dass die Konsole (350) mit ihrer Stirnseite (330) voran mit geringem Spiel durch die Durchlassöffnung (410) geführt werden kann.

7. Haltevorrichtung nach den Ansprüchen 1-6, **dadurch gekennzeichnet, dass** die Klemmflächen (411, 412) durch die Durchlassöffnung (410) voneinander separiert sind.

8. Haltevorrichtung (100) nach den Ansprüchen 5-7, **dadurch gekennzeichnet, dass** die Innenseiten der Seitenwangen (431, 432) der Sicherungsklammer (400) einen lichten Abstand B_{SK} aufweisen, der geringfügig grösser gewählt ist als der Abstand B_{G} der Aussenflächen der Schenkel (241, 242) der Grundschiene (200).

9. Haltevorrichtung (100) nach den Ansprüchen 5-8, **dadurch gekennzeichnet, dass** ein Teil der Seitenwangen (431, 432) als Federzungen (461, 462) ausgebildet sind, die im montierten Zustand eine Klemmwirkung auf die Schenkel (241, 242) der Grundschiene (200) erzielen.

10. Haltevorrichtung (100) nach Anspruch 1-9, **dadurch gekennzeichnet, dass** die Modulklemme (500) als im Querschnitt im Wesentlichen T-förmiges Bauteil ausgeführt ist aus einem Steg (510) und zwei, an einem Ende des Steges (510) rechtwinklig abragenden, Klemmbacken (521, 522), die an ihrer dem Steg (510) zugewandten Unterseite je eine Klemmfläche (511, 512) aufweisen.

11. Haltevorrichtung (100) nach Anspruch 10, **dadurch gekennzeichnet, dass** die Klemmbacken (521, 522) unterschiedlich weit von dem Steg (510) abragen.

12. Haltevorrichtung (100) nach Anspruch 10 und 11, **dadurch gekennzeichnet, dass** zwischen den Klemmbacken (521, 522) ein Verschraubungsbereich (540) angeordnet ist, der, auf der vom Steg (510) abgewandten Oberseite, parallel zum Steg verläuft.

13. Haltevorrichtung (100) nach Anspruch 12, **dadurch gekennzeichnet, dass** im Verschraubungsbereich (540) eine Öffnung zur Aufnahme einer Klemmschraube (590) angebracht ist.

14. Haltevorrichtung (100) nach Anspruch 1-13, **dadurch gekennzeichnet, dass** die Tragplatte (310) die Grundform eines Rechtecks mit den Seitenlängen a und b aufweist mit zwei gegenüberliegenden, entlang zweier paralleler Schnittkanten S₁ und S₂ abgeschnittenen Ecken, wobei die Kante a parallel zur Ebene der Konsole (350) liegt, und die Kantenlänge a höchstens dem Abstand W_{G} der Böden der beiden Nuten (211, 212) entspricht.

15. Haltevorrichtung (100) nach Anspruch 1-14, **dadurch gekennzeichnet, dass** in der Stirnseite (330) der Konsole (350) eine Gewindebohrung (340) angeordnet ist.

16. Verfahren zur vertikalen Montage einer Haltevorrichtung (100) nach Anspruch 1-15 mit folgenden Schritten:
- Vertikales Befestigen mindestens einer Grundschiene (200) oder einer Vielzahl von Abschnitten von Grundschienen (200) an einer bestehenden Fassade oder Gebäudehülle
- Eindrehen eines Modulträgers (300) in die Grundschiene (200) dergestalt, dass die Tragplatte (310) in die Nuten (211, 212) der Grundschiene (200) eingreifen und die Konsole (350) eine waagerechte Orientierung einnimmt
- Aufschieben einer Sicherungsklammer (400) über die Stirnseite (330) der Konsole (350) durch die Durchlassöffnung (410), bis die Seitenwangen (431, 432) an den Aussenseiten der Schenkel (241, 242) der Grundschiene (200) anliegen
- Ausrichten von Modulhalter (300) und Sicherungsklammer (400), bis eine vordefinierte Sollposition erzielt wurde
- Festlegen der Sollposition von Modulhalter (300) und Sicherungsklammer (400) durch Verschrauben der Sicherungsklammer mit der Grundschiene (200) über eine Sicherungsschraube (490)
- Anbringen einer Modulklemme (500) mittels einer Klemmschraube (590)

17. Verfahren nach Anspruch 16, **dadurch gekennzeichnet, dass** die Sicherungsklammer (400) Federzungen (461, 462) nach Anspruch 7 aufweist, die die Sicherungsklammer (400) nach dem Aufschieben auf die Grundschiene (200) im Klemmsitz halten.

18. Verfahren nach Anspruch 16 und 17, **dadurch gekennzeichnet, dass** durch Anbringen mehrerer Haltevorrichtungen (100) eine Anordnung zur Aufnahme und klemmenden Halterung eines bzw. mehrerer Solarmodule gebildet wird.
